# EUROPEAN PATENT APPLICATION

(11) **EP 1 643 708 A1**
(43) Date of publication of application: **05.04.2006**
(21) Application number: 04023351.2
(22) Date of filing: 30.09.2004
(51) Int. Cl.: H04L 29/06, H04Q 7/38, H04M 3/42

(54) **Method and system for using a Push-to-Talk connection in communication conferences managed by at least one non human participant**

(71) Applicant: SIEMENS AKTIENGESELLSCHAFT, 80333 München (DE)
(72) Inventor: Huiban, Yoann, 22300 Ploubezre (FR)

(57) **Abstract**

The invention relates to a method and a communication system for using a Push-to-Talk-Connection between at least two communication devices within a communication network, wherein a request for reserving a half-duplex communication channel is signalled from at least one first communication device (UE1, UE2) to at least one second communication device (PTTS, GS) and wherein only the communication device (e.g. UE2), by which the request has been signalled first, is provided by a half-duplex communication channel characterized in that at least one of said communication devices (GS) is represented by a so-called machine controlled system communicating with at least one of the further communication devices (PTT, UE1, UE2) via the half-duplex channel by transferring human understandable messages.

A further aspect of the invention is a communication system (GS) providing the above-mentioned method.

## Description

The invention relates to a method and a communication system for using a Push-to-Talk-Connection between at least two communication devices within a communication network.

### BACKGROUND OF INVENTION

The invention is particularly used in a communication environment using services which require a communication conference between several involved parties, e.g. games, moderated discussion forum, inquiry, voting or bidding (e.g. auction) services.

The aim of the invention is to organize communication conferences managed by at least one non human participant.

A typical application consists in organizing a game between competitors who have to answer questions through a telecommunication system. The winner is the participant who answered the question first and optionally well.

### Definitions:

**Participant:** A participant in a voice and/or video conference. It can either be a human or a machine.
**Message generator system:** Any system allowing sending a message that can be understood by a human. E.g.: announcement player, Text-To-Speech system (TTS), music player, graphical user interface.
**Response analysis system:** Any system allowing a user response analysis: Automatic Speech Recognition (ASR) system, DTMF Recognition system, graphical user interface...
**Machine (or virtual) participant:** A participant to the conference composed from software and/or hardware system. It may include a response analysis system or a message generator system.
**Question:** Any type of human-understandable message, which may require an action from a participant.

This application could be realized using a full duplex classical conference.
- A specific system is required for winner determination,
- Response analysis is complicated since all participants can speak (answer) together.
- The resources required are proportional to the number of participants.

### SUMMARY OF INVENTION

The present invention aims to overcome the above mentioned disadvantages.

Said problem is solved by the features mentioned in the independent claims. Preferred embodiments of the invention are described in the dependent claims.

### Definition:

Push To Talk system (PTT): Any system allowing half duplex voice or/and video conferences (multimodal), between one or more participants. The server provides a "right-to-speak"-feature, which rules each participant's right to take the communication channel. Priorities may be affected to participants.

A Push-To-Talk conference including one or more participants is created. At least one participant is a virtual-participant, preferably a so-called machine controlled system. In the case of a game, the virtual-participant(s) ask one or more questions, and the other participants have to answer it/them. The winner could be the participant who got the right-to-speak first and optionally answered well the question(s). The answer may be analysed by a response analysis system if necessary. The question(s)/answer(s) cycle can be repeated as many times as necessary.

The service application is composed of a conference manager, responsible of establishing the sessions though the Push-To-Talk server. The Conference Scheduler organize the scheduling of the conference (i.e. in a game context, sends a question, waits for an answer, evaluates the answer) according to a predefined scenario. The Response Analyser analyse the response sent on the channel and the ID of the participant who sent it.

The users database contains the users that can be contacted by the service application. This user database can be filled by several ways, for example by subscription on a web site.
A typical users database could be based on a PoC presence service.

A main aspect of the invention is a method for using a Push-to-Talk-Connection between at least two communication devices within a communication network, wherein a request for reserving a half-duplex communication channel is signalled from at least one first communication device to at least one second communication device and wherein only the communication device, by which the request has been signalled first, is provided by a half-duplex communication channel characterized in that at least one of said communication devices is represented by a so-called machine controlled system communicating with at least one of the further communication devices via the half-duplex channel by transferring human understandable messages.

Further aspect of the invention: A communication device to perform the above-mentioned method comprising
- means for signalling a request for reserving a half-duplex communication channel,
- means for communicating with further communication devices using a half-duplex channel,
- means for generating and transferring human understandable messages and
- means for evaluating received messages.

The invention includes the following advantages:
- Using the "right to speak" as a mechanism to decide the winner of the contest.
- Minimizing the network resources using one half duplex connection per conference.
- Minimizing the response analysis complexity (only one participant can speak at one time)
- Minimizing the response analysis required resources (only one analyser for all participants)

### BRIEF DESCRIPTION OF THE DRAWINGS

Preferred embodiments of the present invention will now be described with reference to the accompanying drawing in which:
The figure 1 illustrates a general network topology of a PTT environment,
The figure 2 illustrates a typical network topology with the focus on a PTT Server,
The figure 3 shows a flow chart related to a PTT session establishment,
The figure 4a and 4b show each a flow chart related to the right to speak pre-emption,
The figure 5 shows a flow chart related to PTT session closing,
The figure 6 depicts a diagram concerning the communication between the network items and
The figure 7 shows a communication between the network items Application server, Virtual participants server, TTS Service and ASR Service when a bidding service is used.

### DETAILLED DESCRIPTION OF THE DRAWINGS

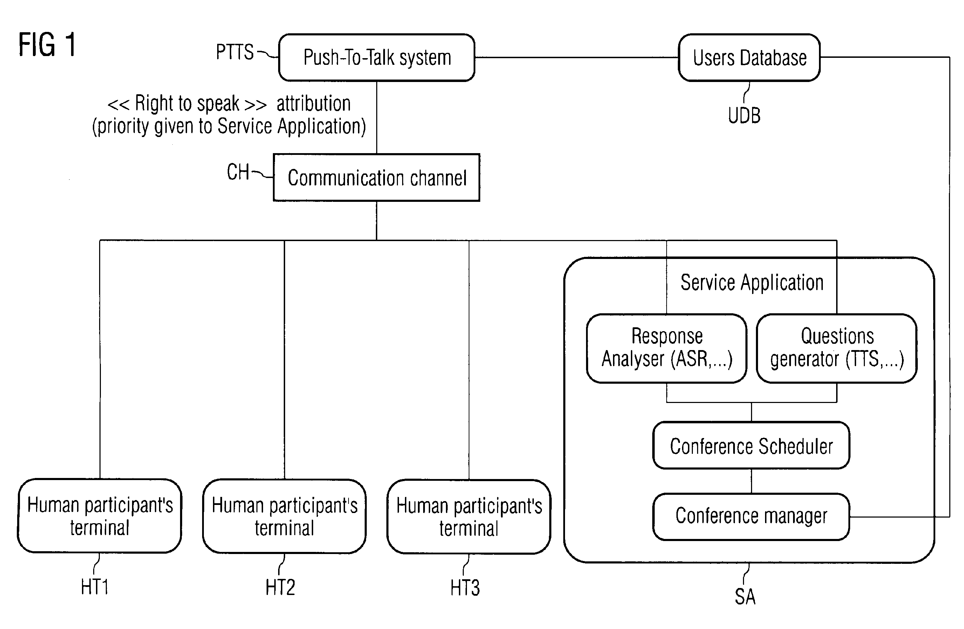

Figure 1 illustrates a general network topology of a PTT environment. There are network items User Database UDB, Push-to-Talk system PTTS, a communication channel CH, several Human participant's terminals e.g. HT1 to HT3, a service Application SA comprising a Response Analyser, Question generator, a conference scheduler and a conference manager. Said network items are connected to each other as shown in the figure 1.

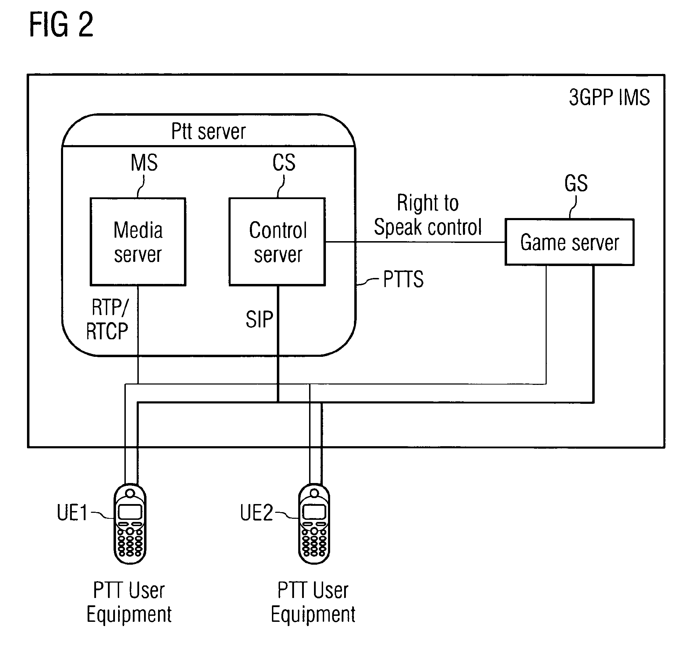

Figure 2 illustrates a typical network topology with the focus on a PTT Server.

The game server GS is seen from the PTT server PTTS as one or more PTT User Equipment UE1, UE2. The sessions are established using the SIP protocol, and the voice is transported on RTP/RTCP.

However, the right to speak control can be taken by the game server GS if the PTT server allows it.

The control server CS is part of the Push to Talk server PTTS. The Push to talk server is composed of two main parts:
- The media server MS manages the RTP/RTCP part: voice transport, floor management. "Floor" is the specific term used to describe the right to speak in the PoC (Push To Talk Over Cellular) standard.
- The control server CS manages the SIP part: PTT session management, priorities setting on the "right to speak".
- The Control and Media server communicate together through a H248 interface.

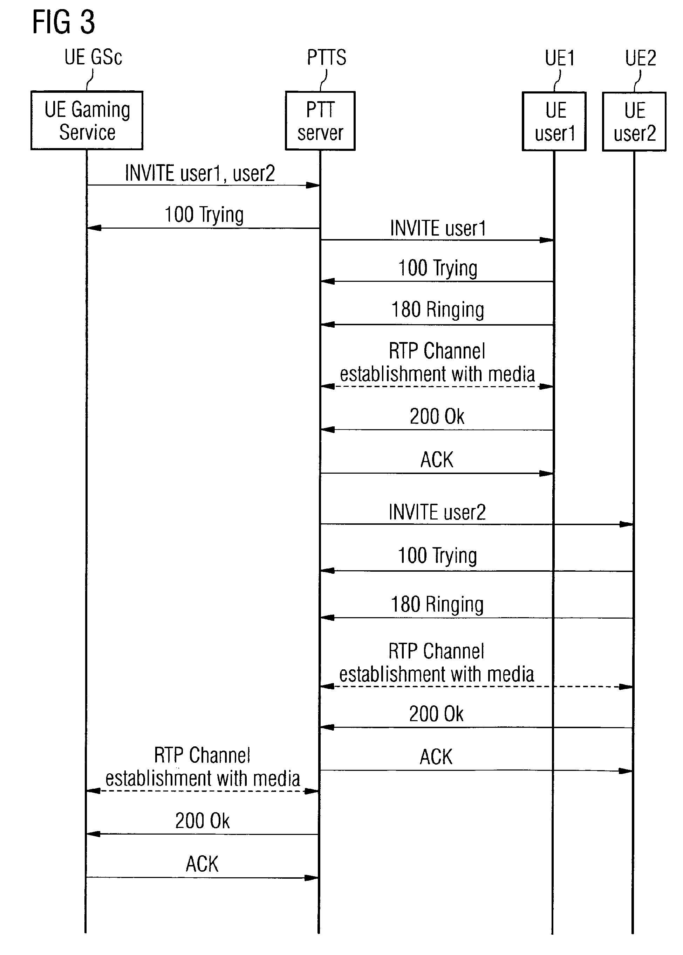

Figure 3 shows a typical flow chart related to a PTT session establishment via SIP between the network items User equipment (UE) Gaming service UEGSc, PTT server PTTS and UE user 1 and 2 UE1, UE2.

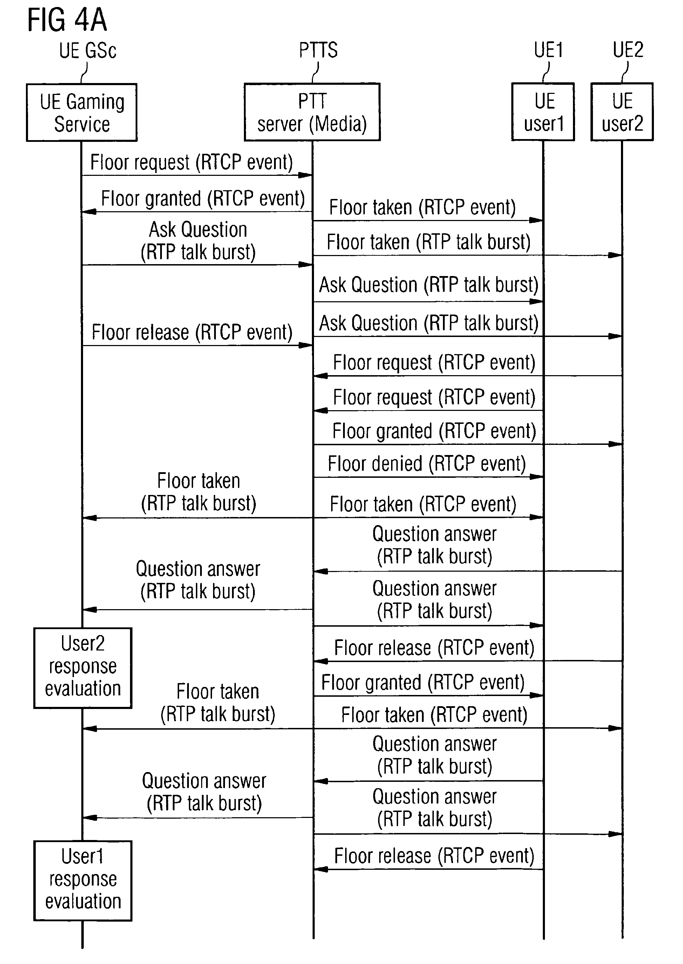

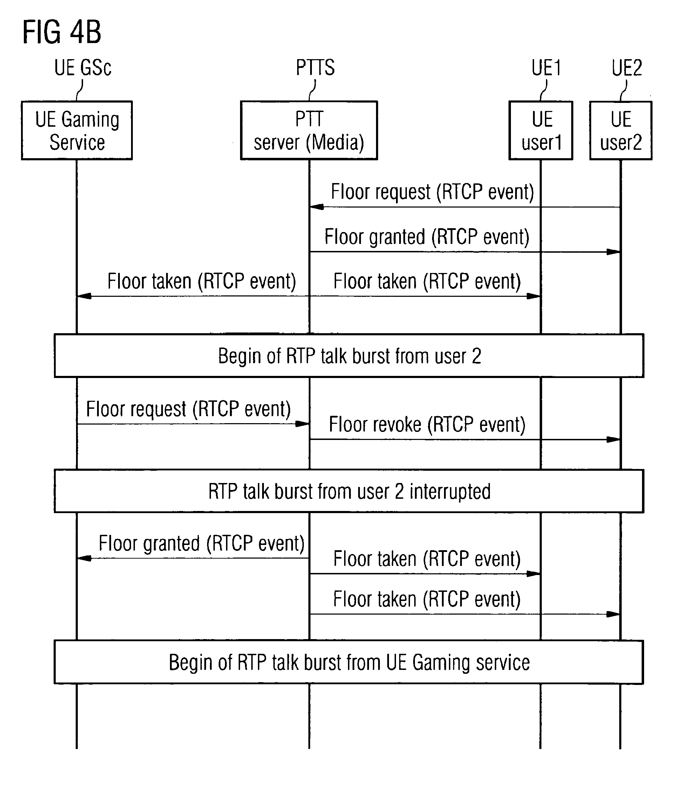

Figure 4a and 4b show each a flow chart related to the right to speak pre-emption. This sample implementation shows how to implement the right to speak pre-emption using RTCP messages defined in the PoC standard.

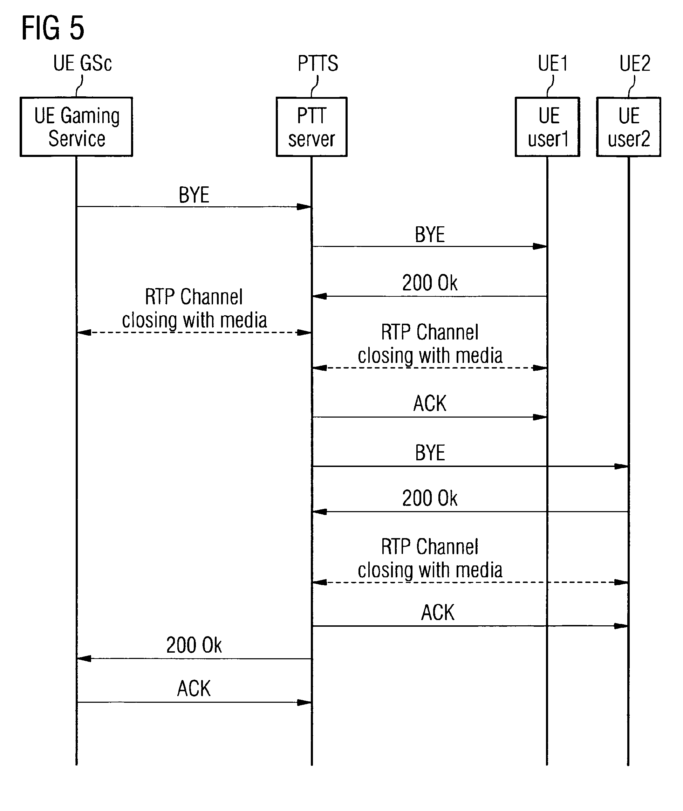

Figure 5 shows a typical flow chart related to PTT session closing.

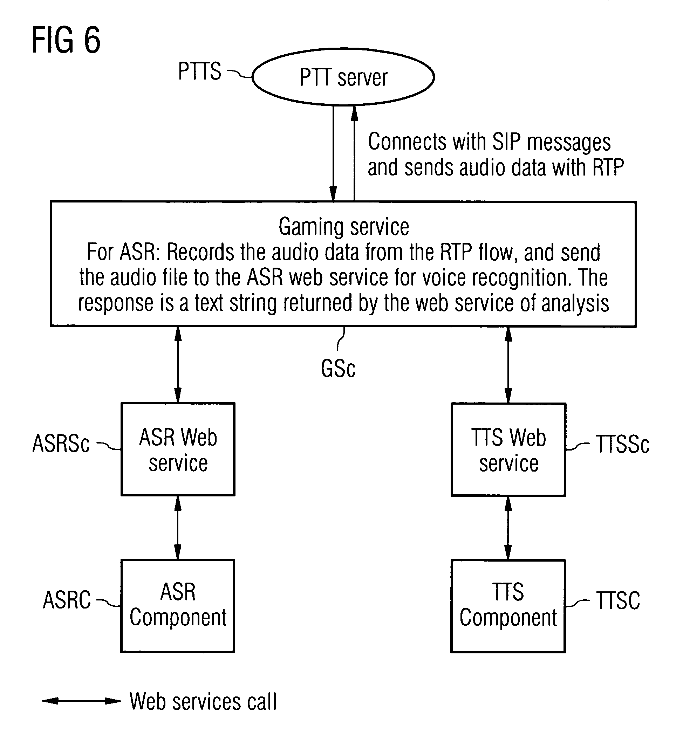

Figure 6 depicts a diagram concerning the communication between the network items PTT server PTTS, Gaming service GSc, ASR Web services ASRSc, ASR Component ASRC, TTS Web services TTSSc and TTS Component TTSC.

Response evaluation:
- DTMF (i.e. press on the phone key to produce a dual-tone multiple frequency representing the key pressed):
   The user answer by pressing directly numbers on the key pad of his phone (ex: auction).
   There are lots of systems able to analyze DTMF. Some include a specific DSP chip like any phone modem, some others are pure software methods based for example on Fast Fourier Transforms. Therefore this could be directly implemented in the game server if necessary.
- ASR (Automatic speech recognition):
   This technology is much more complex, and requires a specific server. All the ASR systems are able to detect DTMF too.
   One way to use an ASR system (and respectively a TTS system) is through web services.

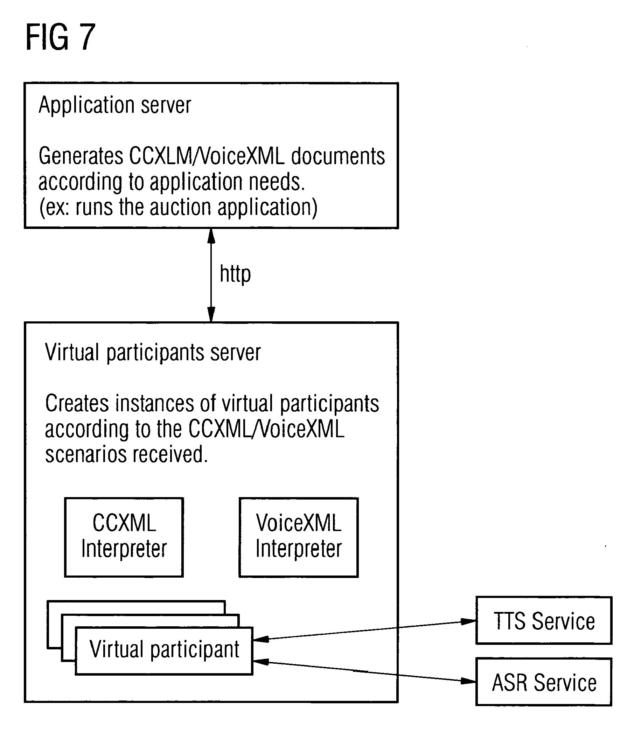

Figure 7 shows a communication between the network items Application server, Virtual participants server, TTS Service and ASR service when a bidding service is used.

Some Internet users decide to try to buy a camera on a bidding web site (like ebay). They register on the web site, giving their SIP identities.

The auction application linked to the web site then generates a CCXML (Call Control extensible Markup Language) script including references to VoiceXML. CCXML defines the call control (conference establishment, ending definition...), and VoiceXML defines the scenario of the bidding (initial announcement definition, bidding recording...).

Theses scripts are interpreted by the Virtual participant server, which instantiates the Virtual Participant. The virtual participant then manages the bidding session and returns the results to the auction application.

The presented invention is particularly employed in connection with the following applications:
- Games: People are called by the server and have to answer one or more questions. The first who get the floor control (i.e.: the right to speak) can give the answer. This can be used for selecting candidates for a TV game at lower cost.
- Advertisement: During the game, advertisement messages can be diffused. To get a chance to win, the human participant must listen to every inserted advertisement messages. This allows the service to be self-paid.
- Marketplaces on Internet: People register on a web site and then are called for a bidding session for example. Each participant's auction is analyzed by an Automatic Speech Recognition or DTMF recognition server. The effect of competition with a real person you can hear or see can increase the auctions, since emotional impact is higher. The atmosphere of real auction places is reconstituted.
- Moderated Discussion forum: The service assures the establishment of the conference, and offers a service for example to record the content of the discussions. It can also ensure equal speak rights for all participants.
- Inquiry services: A person or a group of persons are contacted by the game service, questions are asked by the virtual participant, and responses are collected by the game service.
- Voting services: A group of persons are contacted by the service, and are asked to vote. The game service analyses the answers and keeps track of votes, null votes or abstentions.

## Claims

1. A method for using a Push-to-Talk-Connection between at least two communication devices (PTTS, GS, UE1, UE2) within a communication network, wherein a request for reserving a half-duplex communication channel is signalled from at least one first communication device (UE1, UE2) to at least one second communication device (PTTS, GS) and wherein only the communication device (UE2), by which the request has been signalled first, is provided by a half-duplex communication channel **characterized in that** at least one of said communication devices is represented by a so-called machine controlled system (GS) communicating with at least one of the further communication devices (PTTS, UE1, UE2) via the half-duplex channel by transferring human understandable messages.

2. A method as claimed in the claim 1, wherein the method is employed in connection with a game services providing server (GS).

3. A method as claimed in the claim 1, wherein the method is employed in connection with a moderated discussion forum service providing server.

4. A method as claimed in the claim 1, wherein the method is employed in connection with an inquiry service providing server.

5. A method as claimed in the claim 1, wherein the method is employed in connection with a voting service providing server.

6. A method as claimed in the claim 1, wherein the method is employed in connection with a bidding (auction) service providing server.

7. A method as claimed in any preceding claim, wherein the human understandable message will be generated by an announcement system, by a text-to-speech system, by a music playing system or by a graphical user interface.

8. A method as claimed in any preceding claim, wherein the machine controlled system sends human understandable messages and receives dual tone multiple frequency messages to/from said further communication devices.

9. A method as claimed in any preceding claim, wherein the machine controlled system (SA, GS) evaluates receiving messages coming from said further communication devices.

10. A communication device (SA, GS) to perform the method according to any preceding claim comprising
- means for signalling a request for reserving a half-duplex communication channel,
- means for communicating with further communication devices using a half-duplex channel,
- means for generating and transferring human understandable messages and
- means for evaluating received messages.

11. A communication device according to claim 10, wherein the communication device is represented by a game services providing server (GS).

12. A communication device according to claim 10, wherein the communication device is represented by moderated discussion forum service providing server.

13. A communication device according to claim 10, wherein the communication device is represented by an inquiry service providing server.

14. A communication device according to claim 10, wherein the communication device is represented by a voting service providing server.

15. A communication device according to claim 10, wherein the communication device is represented by a bidding (auctions) service providing server.

16. A communication device according to any preceding claim comprising means for announcement, means for playing music, means for text-to-speech conversion or graphical interface means.

17. A communication device according to any preceding claim comprising speech recognition means.

18. A communication device according to any preceding claim comprising recognition means for dual tone multiple frequency messages.
